(19) Europäisches Patentamt
European Patent Office
Office européen des brevets

(11) EP 2 735 788 A2

(12) EUROPEAN PATENT APPLICATION

(43) Date of publication:
28.05.2014 Bulletin 2014/22

(51) Int Cl.:
F21V 5/04 (2006.01)    G02B 19/00 (2006.01)
F21W 131/101 (2006.01)

(21) Application number: 13193131.3

(22) Date of filing: 15.11.2013

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 27.11.2012 CN 201210491813

(71) Applicant: OSRAM GmbH
80807 München (DE)

(72) Inventors:
• Ming, Yusheng
518053 Shenzhen (CN)
• Yu, Xian
518053 Shenzhen (CN)
• Lin, Aimin
518053 Shenzhen (CN)
• Yang, Jianghui
518053 Shenzhen (CN)

(54) **Lens and illuminating device having the lens**

(57) The present invention relates to a lens (100) for an illuminating device, wherein the lens (100) has a bottom surface (1) and an emergent surface (2) protruding from the bottom surface (1), the bottom surface (1) comprises a recessed region (3) that forms an incident surface (4), characterized in that the emergent surface and the incident surface are configured in such a manner that light is incident upon the incident surface and emits from the emergent surface, the light emitted from the emergent surface forms symmetrical light spots at both sides of a first section (V1) defined by an optical axis (A) of a light source (5) of the illuminating device and a first straight line perpendicular to the optical axis (A), and forms asymmetrical light spots at both sides of a second section (V2) defined by the optical axis (A) and a second straight line perpendicular to the first straight line, wherein light emitted from the emergent surface (2) produces uniform luminance (L) after reflected by various positions of an illuminated surface (S). The present invention further relates to an illuminating device having the above lens (100).

Figure 4

## Description

## Technical Field

The present invention relates to a lens for an illuminating device. In addition, the present invention also relates to an illuminating device, especially a tunnel lamp, having such lens.

## Background Art

LED light-emitting assembly is widely used in tunnel illumination. However, the light distribution performance of the LED light-emitting assembly cannot meet the requirements of tunnel illumination, thus a secondary lens must be additionally arranged on the top of the LED light-emitting assembly. Almost all the existing lenses are configured based on the illuminance uniformity theory. With such lens, the tunnel lamp can obtain quite uniform illuminance. But eyes of an observer receive luminance from the road surface, and the luminance itself depends upon the illuminance and a reflection coefficient of the road surface. When the observer is at different positions with respect to the tunnel lamp, the reflection coefficient of the road surface will be varied, but the illuminance obtained by the prior lens is uniform, that is to say, the illuminance of light emitted from the tunnel lamp is the same at different positions, then the luminance received by the observer at different positions will be different, which leads to one problem, namely, the illuminance of light emitted from the illuminating device using the prior lens is uniform, while the luminance of light reflected by the road surface of the tunnel is not sufficient.

## Summary of the Invention

In order to solve the above technical problem, the present invention provides a lens for an illuminating device, especially for a tunnel lamp. The lens is configured based on the luminance uniformity theory, and light emitted from the lens of the present invention has the uniform luminance after reflected by the road surface of the tunnel. In addition, the present invention also relates to an illuminating device, especially a tunnel lamp, having such lens.

The first object of the present invention is accomplished via a lens for an illuminating device, especially a tunnel lamp. The lens has a bottom surface and an emergent surface protruding from the bottom surface, the bottom surface comprises a recessed region that forms an incident surface, wherein the emergent surface and the incident surface are configured in such a manner that light is incident upon the incident surface and emits from the emergent surface, the light emitted from the emergent surface forms symmetrical light spots at both sides of a first section defined by an optical axis of a light source of the illuminating device and a first straight line perpendicular to the optical axis, and forms asymmetrical light spots at both sides of a second section defined by the optical axis and a second straight line perpendicular to the first straight line, wherein light emitted from the emergent surface produces the uniform luminance after reflected by various positions of an illuminated surface. The lens according to the present invention is configured based on the luminance uniformity theory, that is to say, the luminance of light reflected by various positions of the illuminated surface is firstly set to be the same, so that profiles of the curves of the incident surface and the emergent surface are derived inversely.

According to a preferred solution of the present invention, the emergent surface and the incident surface are configured in such a manner that light emitted from the emergent surface has the illuminance gradually decreasing in a direction away from a vertical axis perpendicular to the illuminated surface, and the illuminance matches reflection coefficients of different positions of the illuminated surface. According to the relation between the illuminance and the luminance, it can be known that the luminance depends upon not only the illuminance but also the reflection coefficients of different positions of the illuminated surface. When the luminance is fixed, it can be derived that the illuminance of light emitted from the emergent surface gradually decreases in a direction away from the vertical axis.

Further according to the present invention, the emergent surface and the incident surface are configured in such a manner that light emitted from the emergent surface has predetermined emergent angle γ and light intensity I so as to obtain the illuminance gradually decreasing in a direction away from the vertical axis, wherein the emergent angle is an angle between the light emitted from the emergent surface and the vertical axis. Preferably, the illuminance is calculated according to the following formula: $E = \dfrac{I \times (\cos \gamma)^3}{H^2}$ , where H is a vertical height from the light source to the illuminated surface. In solutions of the present invention, the illuminance substantially depends upon the emergent angle and the light intensity of the light emitted from the emergent surface. When the lens of the present invention is configured, since the luminance reflected to the observer from various positions of the illuminated surface is the same, the emergent angle and the light intensity of each beam of light emitted from the lens can be obtained, and thus, coordinates of points where each beam light intersects the incident surface and the emergent surface in a 3D space can be obtained by means of a dedicated photo model, and therefore, profiles of the curves of the incident surface and the emergent surface are determined.

According to one preferred solution of the present invention, the reflection coefficient is calculated according to the emergent angle and a deviation angle, wherein the deviation angle is an angle between a first connecting line and an oppositely elongated line of a second connecting line, wherein the first connecting line is between a first intersection point of the vertical axis and the illuminated surface and a second intersection point of the light emitted from the emergent surface and the illuminated surface, and the second connecting line is between a position where an observer is located on the illuminated surface and the second intersection point. In the solutions of the present invention, the emergent angle ranges 0-90°, and the deviation angle ranges 0-180°.

Preferably, the emergent surface comprises a first curve cut off by the bottom surface, a second curve cut out by the first section and a third curve cut off by the second section, and the incident surface comprises a fourth curve cut off by the bottom surface, a fifth curve cut off by the first section and a sixth curve cut off by the second section. Various curves of the emergent surface and the incident surface cooperate with each other so as to produce emitted light having the predetermined emergent angle and light intensity.

Advantageously, the first curve comprises, in an xy coordinate system that takes the light source as an origin on the bottom surface, a first upper curve located in a first quadrant and a second quadrant of the xy coordinate system and a first lower curve located in a third quadrant and a fourth quadrant, wherein the first upper curve is obtained according to formulae $f(a)=0$ $f(-a)=0$ $f(0)=b$; $f(x) > \dfrac{b}{a} \times (a^2 - x^2)^{0.5} > 0$, wherein the first lower curve is obtained according to formulae $f(a)=0$ $f(-a)=0$ $f(0)=-c$, $f(x) < \dfrac{-c}{a} \times (a^2 - x^2)^{0.5} < 0$, where a is a distance from the first curve to the origin in positive axis of x axis , -a is a distance from the first curve to the origin in negative axis of x axis, b is a distance from the first curve to the origin in positive axis of y axis, -c is a distance from the first curve to the origin in negative axis of y axis, where b<c.

Advantageously, the second curve is obtained by the following formulae in an xy coordinate system that takes the light source as an origin on the first section: $f''(x)<0$, $f'(0)>0$, $f(0)=h$ $f(-c)=0$ $f(b)=0$, $f'(x0)=0$, where $0<x0<b$, where h is a distance from an intersection point of the second curve in the positive axis of y axis to the origin, and x0 is a vertical distance from a vertex of the second curve to x axis.

Further advantageously, the third curve is obtained by the following formulae in an xy coordinate system that takes the light source as an origin on the second section: $f''(x)<0$, $f'(0)=0$, $f(0)=h$ $f(-a)=0$ $f(a)=0$.

Advantageously, the fourth curve is obtained by the following formulae in an xy coordinate system that takes the light source as an origin on the bottom surface: $(\dfrac{x}{e})^2 + (\dfrac{y}{g})^2 = 1$, g>e, where g is a distance from an intersection point of the fourth curve in y axis to the origin, and e is a distance from an intersection point of the fourth curve in x axis to the origin.

Advantageously, the fifth curve is obtained by the following formulae in an xy coordinate system that takes the light source as an origin on the first section: $f''(x)<0$, $f'(0)>0$, $f(0)=i$ $f(-j)=0$ $f(j)=0$, $f'(x1)=0$, $0<x1<j$, where j is a distance from an intersection point of the fifth curve in x axis to the origin, i is a distance from an intersection point of the fifth curve in y axis to the origin, and x1 is a vertical distance from a vertex of the fifth curve to x axis.

Further advantageously, the sixth curve is obtained by the following formulae in an xy coordinate system that takes the light source as an origin on the second section: $f''(x)<0$, $f'(0)=0$, $f(0)=i$ $f(-e)=0$, $f(e)=0$.

The other object of the present invention is accomplished via an illuminating device comprising the lens above. Light emitted from the illuminating device has the uniform luminance after reflected by various positions of the illuminated surface.

Preferably, the illuminating device according to the present invention is a tunnel lamp.

Advantageously, the light source is an LED light source which has the advantages of high lighting efficiency, long service lifetime and environmental friendliness.

It is to be understood that the features of the various exemplary embodiments described herein may be combined with each other, unless specifically noted otherwise.

## Brief Description of the Drawings

The accompanying drawings constitute a part of the present Description and are used to provide further understanding of the present invention. Such accompanying drawings illustrate the embodiments of the present invention and are used to describe the principles of the present invention together with the Description. In the accompanying drawings the same components are represented by the same reference numbers. As shown in the drawings:

Fig. 1 is a light path chart of an illuminating device according to the present invention in a plane view;

Fig. 2 is a 3D light path chart of the illuminating device according to the present invention;

Fig. 3 is a chart of reflection coefficients of various positions of an illuminated surface;

Fig. 4 is a perspective view of a lens according to the present invention;

Fig. 5 is a top view of the lens according to the present invention;

Fig. 6 is a bottom view of the lens according to the present invention;

Fig. 7 is a light path chart of the illuminating device according to the present invention in a tunnel;

Fig. 8a is a schematic diagram of a first curve of the lens according to the present invention;

Fig. 8b is a schematic diagram of a second curve of the lens according to the present invention;

Fig. 8c is a schematic diagram of a third curve of the lens according to the present invention;

Fig. 8d is a schematic diagram of a fourth curve of the lens according to the present invention;

Fig. 8e is a schematic diagram of a fifth curve of the lens according to the present invention; and

Fig. 8f is a schematic diagram of a sixth curve of the lens according to the present invention.

## Detailed Description of the Embodiments

In the following detailed description, reference is made to the accompanying drawings, which form a part hereof, and in which is shown by way of illustration specific embodiments in which the invention may be practiced. In this regard, directional terminology, such as "top", "bottom", "upper", "lower", is used in reference to the orientation of the figures being described. Because components of embodiments of the present invention can be positioned in a number of different orientations, the directional terminology is used for purposes of illustration and is in no way limiting. It is to be understood that other embodiments may be utilized and structural or logical changes may made without departing from the scope of the present invention. The following detailed description, therefore, is not to be taken in a limiting sense, and the scope of the present invention is defined by the appended claims.

In an illuminating device 200 according to the present invention, a road surface as an illuminated surface S receives illuminance E of light emitted from an emergent surface 2 of a lens 100 of the illuminating device 200 according to the present invention, and human eyes receive luminance L reflected by the illuminated road surface when viewing the illuminated road surface in the tunnel. The lens 100 according to the present invention is configured according to the luminance uniformity theory, that is to say, the luminance L reflected to eyes of an observer from various positions of the road surface is the same. The luminance L depends upon the illuminance E and the reflection coefficients r of various positions of the road surface, that is to say, $L = E \times r$. When the reflection coefficients r of various positions of the road surface are determined, illuminance E of each beam of light emitted from the emergent surface 2 can be derived, and accordingly, profiles of curves of the emergent surface 2 and the incident surface 4 can be calculated.

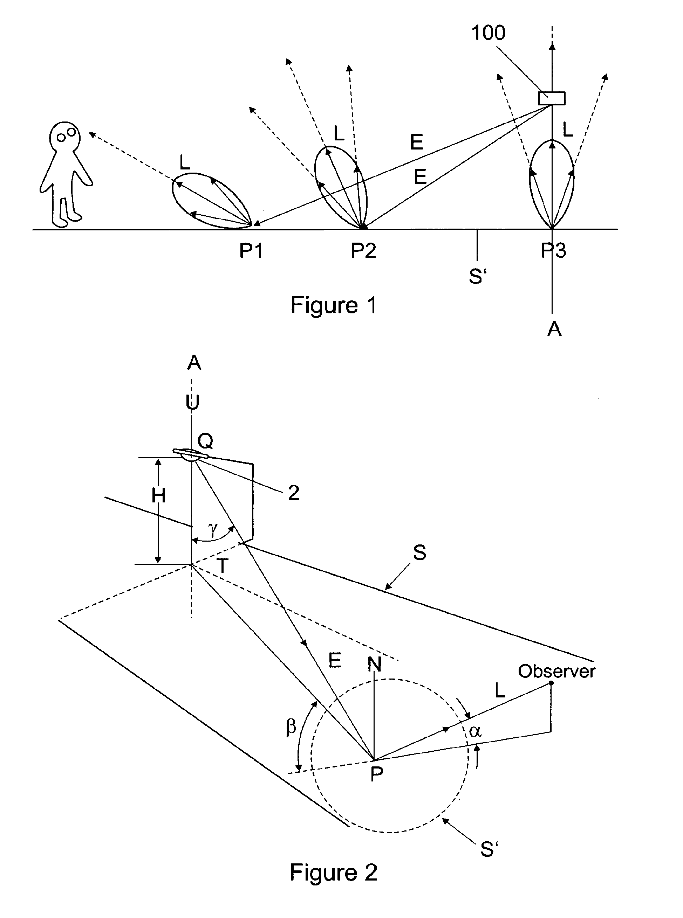

Fig. 1 is a light path chart of the illuminating device 200 according to the present invention in a plane view. Relationship between the luminance L and the illuminance E can be seen more clearly from Fig. 1. In Fig. 1, beams of light emitted from the emergent surface 2 of the lens are projected on positions P1, P2 and P3 in a certain region S' of the illuminated surface S. If the lens is configured according to the prior illuminance uniformity theory, the illuminance E of the light emitted from the emergent surface 2 can satisfy the following formula: EP1=EP2=EP3, where EP1, EP2 and EP3 are illuminance of light emitted to P1, P2 and P3. Thus, based on the description of Fig. 1, various positions viewed by the observer have different reflection coefficients, and then, the luminance L reflected to the observer will be varied, that is to say, LP1>LP2>LP3, where LP1, LP2 and LP3 are luminance of light reflected from P1, P2 and P3, which therefore leads to different luminance of various positions observed by the observer.

The lens of the present invention is configured according to the luminance uniformity theory, as a result, light paths of light emitted by the illuminated surface S are the same, i.e. LP1=LP2=LP3. However, since the reflection coefficients of various positions observed by the observer are different, the illuminance E of light emitted from the emergent surface 2 needs to be adjusted, thus it can be estimated that the illuminance E gradually decreases in a direction away from a vertical axis UQT, and consequently, the profiles of curves of the emergent surface 2 and the incident surface 4 can be calculated according to different values of the illuminance E of respective beams of light.

Fig. 2 is a 3D light path chart of the illuminating device 200 according to the present invention. As can be seen from the light path chart, eyes of the observer see a certain region S' of the illuminated surface S of the road surface, wherein the three observed positions P1, P2 and P3 shown in Fig. 1 are located in the region S'. In Fig. 2, only one position P1 thereof is taken as an example for illustration.

According to one solution of the present invention, the uniform luminance L is obtained by matching the illuminance E with the reflection coefficients r of different positions of the illuminated surface S. In the precondition of maintaining a constant luminance of beams of light reflected by various positions of the illuminated surface S, the illuminance E of each beam of light emitted from the lens can be obtained, and an emergent angle $\gamma$ and a light intensity I that determine the illuminance E can be calculated, wherein the emergent angle $\gamma$ is an angle between light emitted from the emergent surface 2 and the vertical axis UQT, and wherein the illuminance E is calculated according to the following formula:

$$E = \frac{I \times (\cos \gamma)^3}{H^2} \text{,}$$ where $H$ is a vertical height from the light source 5 to the illuminated surface S.

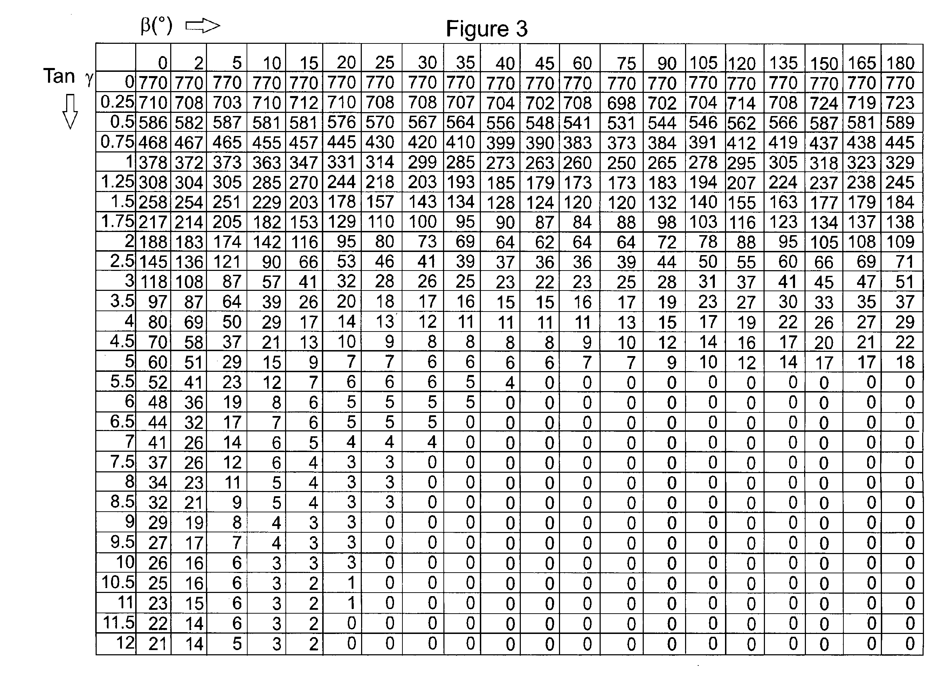

In addition, the reflection coefficient r related to the luminance L is calculated according to the emergent angle $\gamma$ and a deviation angle $\beta$, wherein the deviation angle $\beta$ is an angle between a first connecting line TP and an oppositely elongated line of a second connecting line OP, wherein the first connecting line TP is between a first intersection point T of the emergent angle $\gamma$ and the illuminated surface S and a second intersection point P of the light emitted from the emergent surface 2 and the illuminated surface S, and the second connecting line OP is between a position O where the observer is located on the illuminated surface S and the second intersection point P. The value of the reflection coefficient can be derived according to the chart of reflection coefficients of various positions of the illuminated surface as shown in Fig. 3.

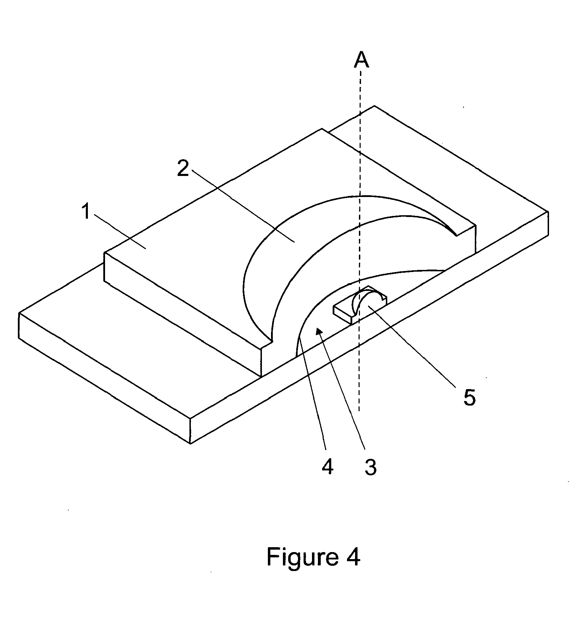

Fig. 4 is a perspective view of a lens according to the present invention. The lens shown in Fig. 4 is cut off by a first section V1. In order to clearly see the inner structure of the lens, Fig. 1 merely shows a lens structure at one side of the first section V1. It can be seen from Fig. 1 that the lens 100 according to the present invention has a bottom surface 1 and an emergent surface 2 protruding from the bottom surface 1, wherein the bottom surface 1 comprises a recessed region 3 that forms an incident surface 4. In the present embodiment, the recessed region 3 defines an accommodating cavity for accommodating the light source 5 of the illuminating device 200.

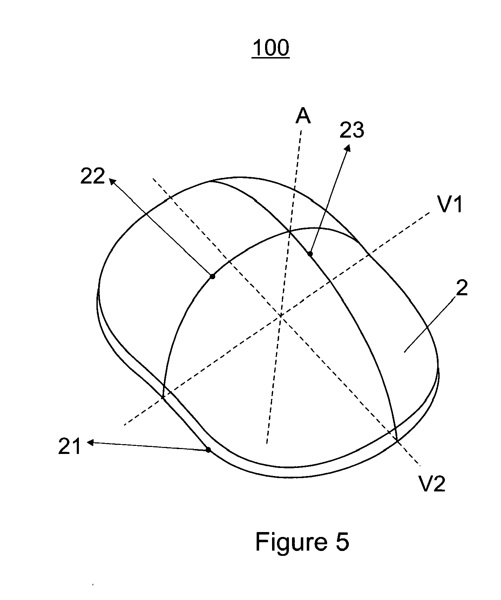

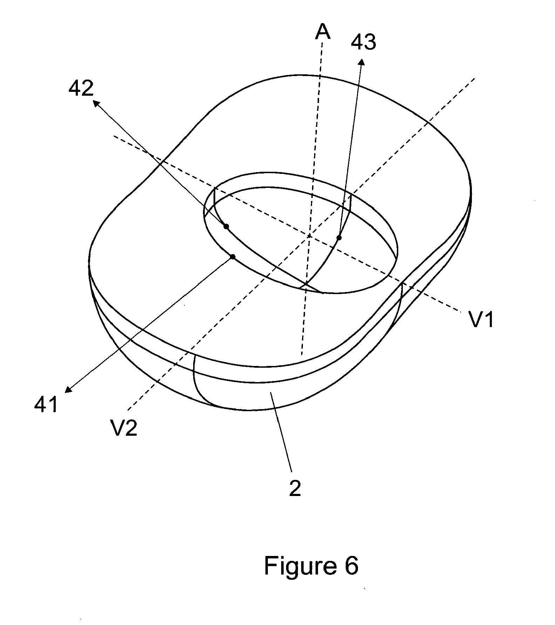

Fig. 5 is a schematic diagram of the lens 100 according to the present invention, viewed from top, and Fig. 6 is a schematic diagram of the lens according to the present invention, viewed from bottom. It can be seen from Fig. 5 and Fig. 6 that that the emergent surface 2 and the incident surface 4 are symmetrical with respect to the first section V1 defined by an optical axis A of a light source 5 of the illuminating device 200 and a first straight line perpendicular to the optical axis A, such that light is incident upon the incident surface 4 and emits from the emergent surface 2, the light emitted from the emergent surface 2 forms symmetrical light spots at both sides of the first section V1, and the emergent surface 2 and the incident surface 4 are asymmetrical with respect to a second section V2 defined by the optical axis A and a second straight line perpendicular to the first straight line, such that light is incident upon the incident surface 4 and emits from the emergent surface 2, and the light emitted from the emergent surface 2 forms asymmetrical light spots at both sides of the second section V2.

In addition, it can be further seen from Fig. 5 and Fig. 6 that the emergent surface 2 comprises a first curve 21 cut off by the bottom surface 1, a second curve 22 cut off by the first section V1 and a third curve 23 cut off by the second section V2, and the incident surface 4 comprises a fourth curve 41 cut off by the bottom surface 1, a fifth curve 42 cut off by the first section V1 and a sixth curve 43 cut off by the second section V2.

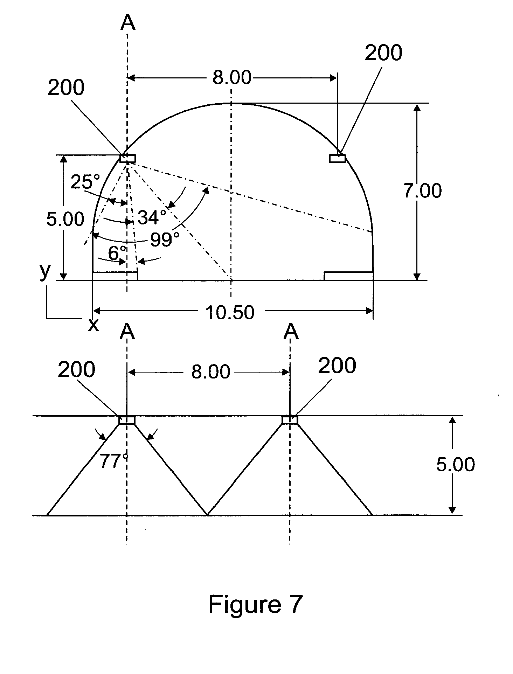

Fig. 7 shows a light path chart of the lens according to the present invention used for a tunnel lamp in a tunnel. It can be seen from Fig. 7 that the tunnel lamps according to the present invention are mounted at both side of the top of the tunnel. Viewed from a section of an extending direction perpendicular to the tunnel, only two facing tunnel lamps as the illuminating device 200 according to the present invention can be seen. The upper view of Fig. 7 only shows the illumination range of the left tunnel lamp. Viewed from the optical axis perpendicular to the road surface of the tunnel, light emitted from the illuminating device 200 to the right side of the tunnel has a greater emergent angle than that to the left side, that is to say, asymmetrical light spots are produced on the road surface. But in the lower view of Fig. 7, a section cut off in a direction parallel to a longitudinal extending direction of the tunnel is shown. A plurality of tunnel lamps can be seen from the figure, and emergent angles of light at both sides of the optical axis perpendicular to the road surface of the tunnel are the same, that is to say, symmetrical light spots are produced on the road surface.

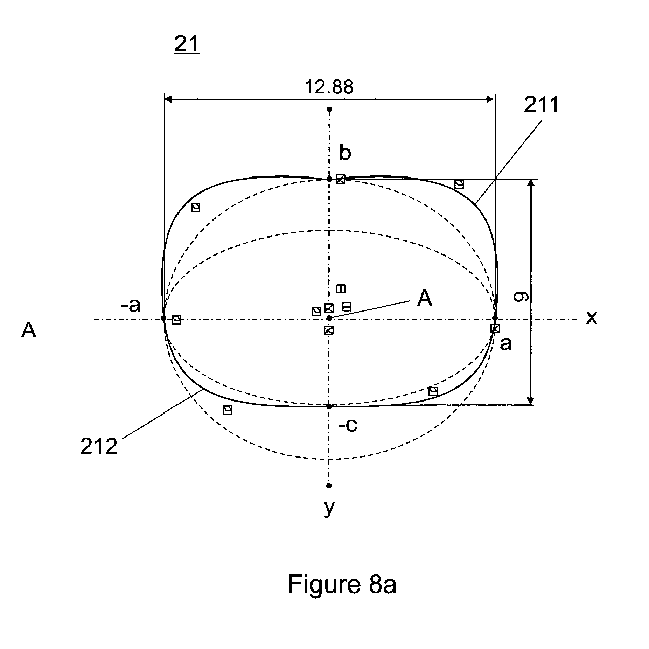

Fig. 8a is a schematic diagram of the first curve 21 of the lens according to the present invention. It can be seen from Fig. 8a that the first curve 21 comprises, in an xy coordinate system that takes the light source 5 as an origin on the bottom surface 1, a first upper curve 211 located in a first quadrant and a second quadrant of the xy coordinate system and a first lower curve 212 located in a third quadrant and a fourth quadrant, wherein the first upper curve 211 is obtained according to formulae $f(a)=0$ $f(-a)=0$ $f(0)=b$; $f(x) > \dfrac{b}{a} \times (a^2 - x^2)^{0.5} > 0$, wherein the first lower curve 212 is obtained according to formulae $f(a)=0$ $f(-a)=0$ $f(0)=-c$, $f(x) < \dfrac{-c}{a} \times (a^2 - x^2)^{0.5} < 0$, where a is a distance from the first curve (21) to the origin in positive axis of x axis , -a is a distance from the first curve (21) to the origin in negative axis of x axis, b is a distance from the first curve (21) to the origin in positive axis of y axis, -c is a distance from the first curve (21) to the origin in negative axis of y axis, where b<c. In practical application, the lens 100 is arranged in the tunnel in such a manner that the first upper curve 22 is configured to be oriented to middle of the tunnel such that light emitted from the lens 100 forms asymmetrical light spots on the second section V2, that is to say, the lens 100 is enabled to have a greater light emergent angle at one side of the second section V2 facing to the middle of the tunnel.

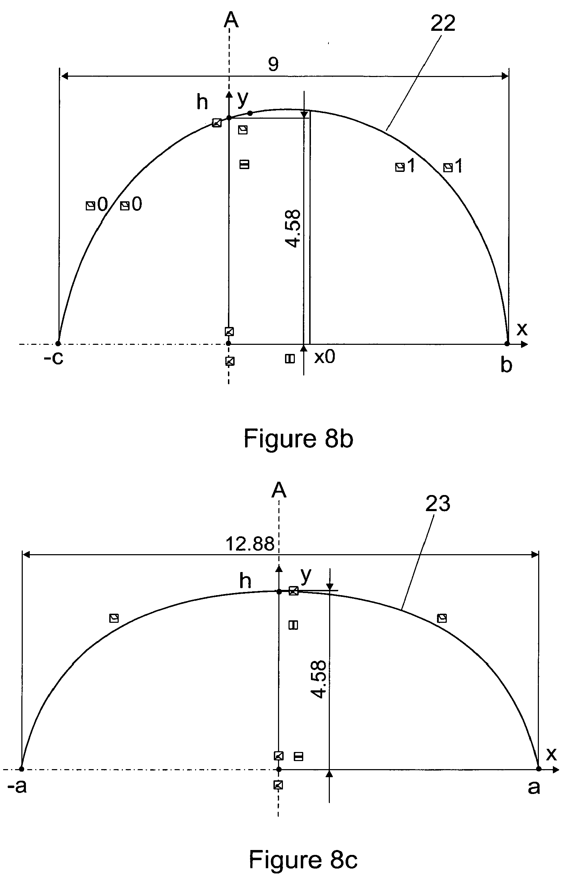

Fig. 8b is a schematic diagram of the second curve 22 of the lens according to the present invention. The second curve (22) is obtained by the following formulae in an xy coordinate system that takes the light source (5) as an origin on the first section (V1): $f''(x)<0$, $f'(0)>0$, $f(0)=h$ $f(-c)=0$ $f(b)=0$, $f'(x0)=0$, where 0<x0<b, where h is a distance from an intersection point of the second curve 22 in the positive axis of y axis to the origin, and x0 is a vertical distance from a vertex of the second curve 22 to x axis. According to the present invention, the second curve 22 is asymmetrical with respect to the second section V2, and an extending direction of a projection of the second curve 22 on a plane defined by the bottom surface 1 is perpendicular to a longitudinal extending direction of an illuminated surface S. The extending direction of the illuminated surface S is an extending direction of the tunnel in solutions of the present invention.

Fig. 8c is a schematic diagram of the third curve 23 of the lens 100 according to the present invention. The third curve 23 is obtained by the following formulae in an xy coordinate system that takes the light source (5) as an origin on the second section (V2): $f''(x)<0$, $f'(0)=0$, $f(0)=h$ $f(-a)=0$ $f(a)=0$. According to the present invention, the third curve 23 is symmetrical with respect to the first section V1, and an extending direction of a projection of the third curve 23 on a plane defined by the bottom surface 1 is parallel to the illuminated surface S, i.e. parallel to a longitudinal extending direction of the tunnel.

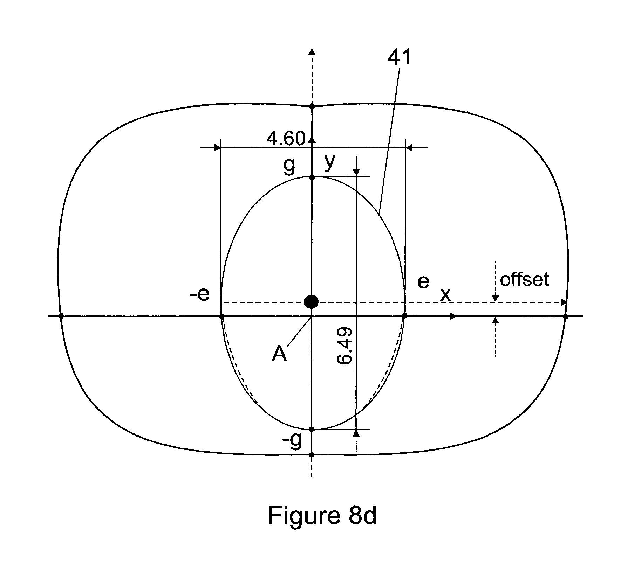

Fig. 8d is a schematic diagram of the fourth curve 41 of the lens 100 according to the present invention. The fourth curve 41 is obtained by the following formulae in an xy coordinate system that takes the light source 5 as an origin on the bottom surface (1): $\left(\dfrac{x}{e}\right)^2 + \left(\dfrac{y}{g}\right)^2 = 1$, g>e, where g is a distance from an intersection point of the fourth curve 41 in y axis to the origin, and e is a distance from an intersection point of the fourth curve 41 in x axis to the origin. According to the present invention, a semimajor axis g of the fourth curve 41 is perpendicular to the illuminated surface S, i.e. perpendicular to the longitudinal extending direction of the tunnel, and a semiminor axis e is parallel to the longitudinal extending direction of the tunnel. In addition, in solutions of the present invention, a center of the elliptical fourth curve 41 may not overlap the origin, and designers can appropriately adjust the location of the center of the fourth curve 41 according to desired light distribution effect to make the same offset to tunnel center of the tunnel such that light emitted from the lens has a greater emergent angel in a direction of the tunnel center.

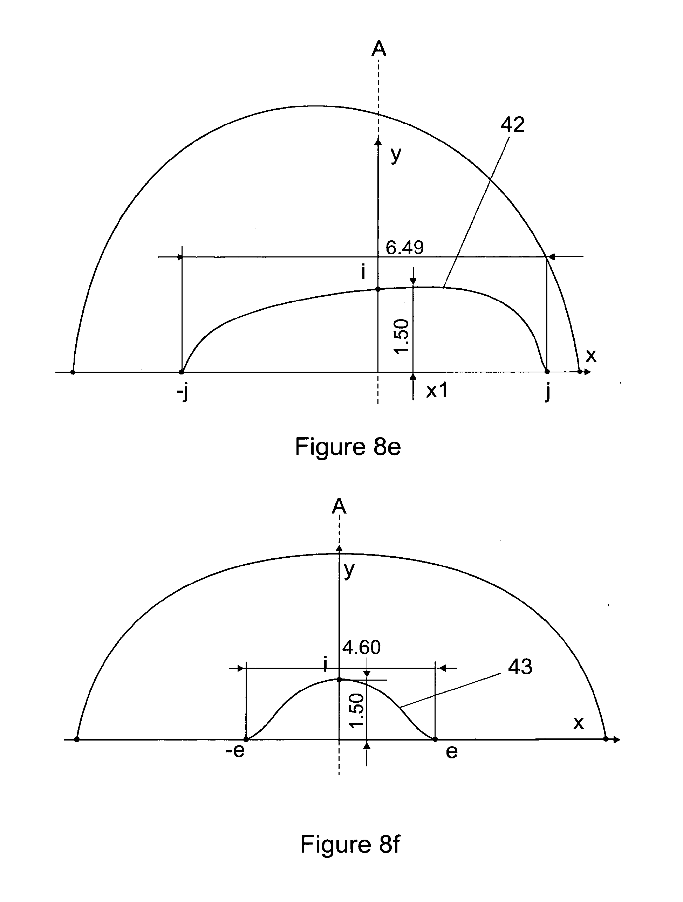

Fig. 8e is a schematic diagram of the fifth curve 42 of the lens according to the present invention. The fifth curve 42 is obtained by the following formulae in an xy coordinate system that takes the light source (5) as an origin on the first section (V1): $f''(x)<0$, $f'(0)>0$, $f(0)=i$ $f(-j)=0$ $f(j)=0$, $f'(x1)=0$, 0<x1<j, where j is a distance from an intersection point of the fifth curve 42 in x axis to the origin, i is a distance from an intersection point of the fifth curve 42 in y axis to the origin, and x1 is a vertical distance from a vertex of the fifth curve 42 to x axis. According to the present invention, the fifth curve 42 is asymmetrical with respect to the second section V2, and an extending direction of a projection of the fifth curve 42 on a plane defined by the bottom surface is perpendicular to the illuminated surface S, i.e. perpendicular to the longitudinal extending direction of the tunnel.

Fig. 8f is a schematic diagram of the sixth curve 43 of the lens according to the present invention. The sixth curve 43 is obtained by the following formulae in an xy coordinate system that takes the light source (5) as an origin on the second section (V2): $f''(x)<0$, $f'(0)=0$, $f(0)=i$ $f(-e)=0$. According to the present invention, the sixth curve 43 is symmetrical with respect to the first section V1, and an extending direction of a projection of the sixth curve 43 on a plane defined by the bottom surface 1 is parallel to the illuminated surface S, i.e. parallel to the longitudinal extending direction of the tunnel.

The above is merely preferred embodiments of the present invention but not to limit the present invention. For the person skilled in the art, the present invention may have various alterations and changes. Any alterations, equivalent substitutions, improvements, within the spirit and theory of the present invention, should be covered in the protection scope of the present invention.

List of reference signs

| | |
|---|---|
| 100 | lens |
| 200 | illuminating device |
| 1 | bottom surface |
| 2 | emergent surface |
| 21 | first curve |
| 22 | second curve |
| 23 | third curve |
| 3 | recessed region cavity |
| 4 | incident surface |
| 41 | fourth curve |
| 42 | fifth curve |
| 43 | sixth curve |
| 5 | light source |
| V1 | first section |
| V2 | second section |
| L | luminance |
| E | illuminance |
| r | reflection coefficient |
| S | illuminated surface |
| S' | a certain region of the illuminated surface |
| I | light intensity |
| $\gamma$ | emergent angle |
| $\beta$ | deviation angle |
| UQT | vertical axis |
| $H$ | vertical height from the light source 5 to the illuminated surface S |
| T | first intersection point of the vertical axis UQT and the illuminated surface S |
| TP | first connecting line |
| O | position where the observer is located on the illuminated surface S |
| OP | second connecting line |
| P1, P2, P3 | observed positions in a certain region S' of the illuminated surface S |

**Claims**

1. A lens (100) for an illuminating device, wherein the lens (100) has a bottom surface (1) and an emergent surface (2) protruding from the bottom surface (1), the bottom surface (1) comprises a recessed region (3) that forms an incident surface (4), **characterized in that** the emergent surface (2) and the incident surface (4) are configured in such a manner that light is incident upon the incident surface (4) and emits from the emergent surface (2), the light emitted from the emergent surface (2) forms symmetrical light spots at both sides of a first section (V1) defined by an optical axis (A) of a light source (5) of the illuminating device and a first straight line perpendicular to the optical axis (A), and forms asymmetrical light spots at both sides of a second section (V2) defined by the optical axis (A) and a second straight line perpendicular to the first straight line, wherein light emitted from the emergent surface (2) produces uniform luminance (L) after reflected by various positions of an illuminated surface (S).

2. The lens (100) according to Claim 1, **characterized in that** the emergent surface (2) and the incident surface (4) are configured in such a manner that light emitted from the emergent surface (2) has illuminance (E) gradually decreasing in a direction away from a vertical axis (UQT) perpendicular to the illuminated surface (S), and the illuminance (E) matches reflection coefficients (r) of different positions of the illuminated surface (S).

3. The lens (100) according to Claim 2, **characterized in that** the emergent surface (2) and the incident surface (4) are configured in such a manner that light emitted from the emergent surface (2) has a predetermined emergent angle ($\gamma$) and light intensity (I) so as to obtain the illuminance (E) gradually decreasing in a direction away from the vertical axis (UQT), wherein the emergent angle ($\gamma$) is an angle between the light emitted from the emergent surface (2) and the vertical axis (UQT).

4. The lens (100) according to Claim 3, **characterized in that** the illuminance (E) is calculated according to the following

formula: $E = \dfrac{I \times (\cos\gamma)^3}{H^2}$ , where H is a vertical height from the light source (5) to the illuminated surface (S).

5. The lens (100) according to Claim 3, **characterized in that** the reflection coefficient (r) is calculated according to the emergent angle ($\gamma$) and a deviation angle ($\beta$), wherein the deviation angle ($\beta$) is an angle between a first connecting line (TP) and an oppositely elongated line of a second connecting line (OP), wherein the first connecting line (TP) is between a first intersection point (T) of the vertical axis (UQT) and the illuminated surface (S) and a second intersection point (P) of the light emitted from the emergent surface (2) and the illuminated surface (S), and the second connecting line (OP) is between a position (O) where an observer is located on the illuminated surface (S) and the second intersection point (P).

6. The lens (100) according to any one of Claims 2-5, **characterized in that** the emergent surface (2) comprises a first curve (21) cut off by the bottom surface (1), a second curve (22) cut out by the first section (V1) and a third curve (23) cut off by the second section (V2), and the incident surface (4) comprises a fourth curve (41) cut off by the bottom surface (1), a fifth curve (42) cut off by the first section (V1) and a sixth curve (43) cut off by the second section (V2).

7. The lens (100) according to Claim 6, **characterized in that** the first curve (21) comprises, in an xy coordinate system that takes the light source (5) as an origin on the bottom surface (1), a first upper curve (211) located in a first quadrant and a second quadrant of the xy coordinate system and a first lower curve (212) located in a third quadrant and a fourth quadrant, wherein the first upper curve (211) is obtained according to formulae $f(a)=0$ $f(-a)=0$ $f(0)=b$;

$f(x) > \dfrac{b}{a} \times (a^2 - x^2)^{0.5} > 0$ , wherein the first lower curve (212) is obtained according to formulae $f(a)=0$

$f(-a)=0$ $f(0)=-c$, $f(x) < \dfrac{-c}{a} \times (a^2 - x^2)^{0.5} < 0$ , where a is a distance from the first curve (21) to the origin in positive axis of x axis , -a is a distance from the first curve (21) to the origin in negative axis of x axis, b is a distance from the first curve (21) to the origin in positive axis of y axis, -c is a distance from the first curve (21) to the origin in negative axis of y axis, where b<c.

8. The lens (100) according to Claim 7, **characterized in that** the second curve (22) is obtained by the following formulae in an xy coordinate system that takes the light source (5) as an origin on the first section (V1): $f''(x)<0$, $f'(0)>0$, $f(0)=h$ $f(-c)=0$ $f(b)=0$, $f'(x0)=0$, where 0<x0<b, where h is a distance from an intersection point of the second curve (22) in the positive axis of y axis to the origin, and x0 is a vertical distance from a vertex of the second curve (22) to x axis.

9. The lens (100) according to Claim 8, **characterized in that** the third curve (23) is obtained by the following formulae in an xy coordinate system that takes the light source (5) as an origin on the second section (V2): $f''(x)<0$, $f'(0)=0$, $f(0)=h$ $f(-a)=0$ $f(a)=0$.

10. The lens (100) according to Claim 6, **characterized in that** the fourth curve (41) is obtained by the following formulae in an xy coordinate system that takes the light source (5) as an origin on the bottom surface (1): $(\dfrac{x}{e})^2 + (\dfrac{y}{g})^2 = 1$ ,

g>e, where g is a distance from an inter-section point of the fourth curve (41) in y axis to the origin, and e is a distance from an intersection point of the fourth curve (41) in x axis to the origin.

11. The lens (100) according to Claim 10, **characterized in that** the fifth curve (42) is obtained by the following formulae in an xy coordinate system that takes the light source (5) as an origin on the first section (V1): $f''(x)<0$, $f'(0)>0$, $f(0)=i$

*f(-j)=0 f(j)=0, f'(x1)=0, 0<x1<j*, where j is a distance from an intersection point of the fifth curve (42) in x axis to the origin, i is a distance from an intersection point of the fifth curve (42) in y axis to the origin, and x1 is a vertical distance from a vertex of the fifth curve (42) to x axis.

12. The lens (100) according to Claim 11, **characterized in that** the sixth curve (43) is obtained by the following formulae in an xy coordinate system that takes the light source (5) as an origin on the second section (V2):

$$f''(x) < 0 , \quad f'(0) = 0 , \quad f(0) = i \quad f(-e) = 0 , \quad f(e) = 0 .$$

13. An illuminating device (200), comprising a light source (5), **characterized in that** the illuminating device (200) further comprises the lens (100) according to any one of Claims 1-12.

14. The illuminating device (200) according to Claim 13, **characterized in that** the illuminating device (200) is a tunnel lamp.

15. The illuminating device (200) according to Claim 13, **characterized in that** the light source (5) is an LED light source.

Figure 1

Figure 2

β(°) ⟹              Figure 3

Tan γ ⟱

| Tan γ \ β | 0 | 2 | 5 | 10 | 15 | 20 | 25 | 30 | 35 | 40 | 45 | 60 | 75 | 90 | 105 | 120 | 135 | 150 | 165 | 180 |
|---|---|---|---|---|---|---|---|---|---|---|---|---|---|---|---|---|---|---|---|---|
| 0 | 770 | 770 | 770 | 770 | 770 | 770 | 770 | 770 | 770 | 770 | 770 | 770 | 770 | 770 | 770 | 770 | 770 | 770 | 770 | 770 |
| 0.25 | 710 | 708 | 703 | 710 | 712 | 710 | 708 | 708 | 707 | 704 | 702 | 708 | 698 | 702 | 704 | 714 | 708 | 724 | 719 | 723 |
| 0.5 | 586 | 582 | 587 | 581 | 581 | 576 | 570 | 567 | 564 | 556 | 548 | 541 | 531 | 544 | 546 | 562 | 566 | 587 | 581 | 589 |
| 0.75 | 468 | 467 | 465 | 455 | 457 | 445 | 430 | 420 | 410 | 399 | 390 | 383 | 373 | 384 | 391 | 412 | 419 | 437 | 438 | 445 |
| 1 | 378 | 372 | 373 | 363 | 347 | 331 | 314 | 299 | 285 | 273 | 263 | 260 | 250 | 265 | 278 | 295 | 305 | 318 | 323 | 329 |
| 1.25 | 308 | 304 | 305 | 285 | 270 | 244 | 218 | 203 | 193 | 185 | 179 | 173 | 173 | 183 | 194 | 207 | 224 | 237 | 238 | 245 |
| 1.5 | 258 | 254 | 251 | 229 | 203 | 178 | 157 | 143 | 134 | 128 | 124 | 120 | 120 | 132 | 140 | 155 | 163 | 177 | 179 | 184 |
| 1.75 | 217 | 214 | 205 | 182 | 153 | 129 | 110 | 100 | 95 | 90 | 87 | 84 | 88 | 98 | 103 | 116 | 123 | 134 | 137 | 138 |
| 2 | 188 | 183 | 174 | 142 | 116 | 95 | 80 | 73 | 69 | 64 | 62 | 64 | 64 | 72 | 78 | 88 | 95 | 105 | 108 | 109 |
| 2.5 | 145 | 136 | 121 | 90 | 66 | 53 | 46 | 41 | 39 | 37 | 36 | 36 | 39 | 44 | 50 | 55 | 60 | 66 | 69 | 71 |
| 3 | 118 | 108 | 87 | 57 | 41 | 32 | 28 | 26 | 25 | 23 | 22 | 23 | 25 | 28 | 31 | 37 | 41 | 45 | 47 | 51 |
| 3.5 | 97 | 87 | 64 | 39 | 26 | 20 | 18 | 17 | 16 | 15 | 15 | 16 | 17 | 19 | 23 | 27 | 30 | 33 | 35 | 37 |
| 4 | 80 | 69 | 50 | 29 | 17 | 14 | 13 | 12 | 11 | 11 | 11 | 11 | 13 | 15 | 17 | 19 | 22 | 26 | 27 | 29 |
| 4.5 | 70 | 58 | 37 | 21 | 13 | 10 | 9 | 8 | 8 | 8 | 8 | 9 | 10 | 12 | 14 | 16 | 17 | 20 | 21 | 22 |
| 5 | 60 | 51 | 29 | 15 | 9 | 7 | 7 | 6 | 6 | 6 | 6 | 7 | 7 | 9 | 10 | 12 | 14 | 17 | 17 | 18 |
| 5.5 | 52 | 41 | 23 | 12 | 7 | 6 | 6 | 6 | 5 | 4 | 0 | 0 | 0 | 0 | 0 | 0 | 0 | 0 | 0 | 0 |
| 6 | 48 | 36 | 19 | 8 | 6 | 5 | 5 | 5 | 5 | 0 | 0 | 0 | 0 | 0 | 0 | 0 | 0 | 0 | 0 | 0 |
| 6.5 | 44 | 32 | 17 | 7 | 6 | 5 | 5 | 5 | 0 | 0 | 0 | 0 | 0 | 0 | 0 | 0 | 0 | 0 | 0 | 0 |
| 7 | 41 | 26 | 14 | 6 | 5 | 4 | 4 | 4 | 0 | 0 | 0 | 0 | 0 | 0 | 0 | 0 | 0 | 0 | 0 | 0 |
| 7.5 | 37 | 26 | 12 | 6 | 4 | 3 | 3 | 0 | 0 | 0 | 0 | 0 | 0 | 0 | 0 | 0 | 0 | 0 | 0 | 0 |
| 8 | 34 | 23 | 11 | 5 | 4 | 3 | 3 | 0 | 0 | 0 | 0 | 0 | 0 | 0 | 0 | 0 | 0 | 0 | 0 | 0 |
| 8.5 | 32 | 21 | 9 | 5 | 4 | 3 | 3 | 0 | 0 | 0 | 0 | 0 | 0 | 0 | 0 | 0 | 0 | 0 | 0 | 0 |
| 9 | 29 | 19 | 8 | 4 | 3 | 3 | 0 | 0 | 0 | 0 | 0 | 0 | 0 | 0 | 0 | 0 | 0 | 0 | 0 | 0 |
| 9.5 | 27 | 17 | 7 | 4 | 3 | 3 | 0 | 0 | 0 | 0 | 0 | 0 | 0 | 0 | 0 | 0 | 0 | 0 | 0 | 0 |
| 10 | 26 | 16 | 6 | 3 | 3 | 3 | 0 | 0 | 0 | 0 | 0 | 0 | 0 | 0 | 0 | 0 | 0 | 0 | 0 | 0 |
| 10.5 | 25 | 16 | 6 | 3 | 2 | 1 | 0 | 0 | 0 | 0 | 0 | 0 | 0 | 0 | 0 | 0 | 0 | 0 | 0 | 0 |
| 11 | 23 | 15 | 6 | 3 | 2 | 1 | 0 | 0 | 0 | 0 | 0 | 0 | 0 | 0 | 0 | 0 | 0 | 0 | 0 | 0 |
| 11.5 | 22 | 14 | 6 | 3 | 2 | 0 | 0 | 0 | 0 | 0 | 0 | 0 | 0 | 0 | 0 | 0 | 0 | 0 | 0 | 0 |
| 12 | 21 | 14 | 5 | 3 | 2 | 0 | 0 | 0 | 0 | 0 | 0 | 0 | 0 | 0 | 0 | 0 | 0 | 0 | 0 | 0 |

Figure 4

100

Figure 5

Figure 6

Figure 7

Figure 8a

Figure 8b

Figure 8c

Figure 8d

Figure 8e

Figure 8f